# EUROPEAN PATENT APPLICATION

(11) **EP 4 613 389 A1**
(43) Date of publication of application: **10.09.2025**
(21) Application number: 25161053.1
(22) Date of filing: 28.02.2025
(51) Int. Cl.: B08B 3/14, B08B 9/093, C02F 1/24, C02F 1/40, B01D 17/02

(54) **A PROCESS FOR CLEANING OIL TANKS AND VESSELS BY TREATING THE FLOTATION GENERATED RESIDUES AND REUSING THE WASHING WATER**

(30) Priority: 06.03.2024 BR 102024004458
(71) Applicant: AMBIPAR RESPONSE TANK CLEANING S/A, 24030-290 NITERÓI RJ (BR)
(72) Inventor: SOTAO CALDERARO, ROGÉRIO, Rio de Janeiro (BR)
(74) Representative: Pereira Garcia, João Luís

(57) **Abstract**

The present invention is directed to a process for cleaning oil tanks and vessels by treating the residues generated thereby using a skimer (23) inside the tank (11), a treatment unit (1) outside the tank comprising double vibrating sieves (2) and floater, and reusing the washing water, which was developed to reduce the amount of residues generated in the activities of cleaning oil tanks and containers both onshore and offshore, reincorporating the oil, that has been previously considered to be residue, as a product into the process, reducing the exposure of workers to risks in the confined space, and increasing the availability of the productive assets of the unit. The process for cleaning oil tanks and vessels by treating the flotation generated residues and reusing the washing water is used for the purpose of cleaning oil-containing tanks and containers, by combining the use of water spurts and application of neutral biodegradable chemicals, such as degreasing solvents or descaling detergents, separating solids using a double vibratory sieve and oily liquids through flotation, recovering and reincorporating the oil into the production process of the unit and reusing the washing water.

## Description

The present patent is directed to a process for cleaning oil tanks and vessels by treating the residues generated thereby using a skimer inside the tank, a treatment unit outside the tank comprising double vibrating sieves and a floater, reusing the washing water, which was developed to reduce the amount of residues generated in the activities of cleaning oil tanks and containers both onshore and offshore, reincorporating the oil that has been previously considered to be residual as a product into the process, reducing the exposure of workers to risks in the confined space, and increasing the availability of the productive assets of the unit.

### BACKGROUND

In Exploration and Production (E&P) activities, the containers are crucial for the separation of oil, production water and gases from the bottom of the well, and it would not be possible to store the oil produced in oil fields without using any tank. However, even when separating containers are used, many sediments from the well and the rust caused by the oxidation of nets and the structure are deposited on the bottom of the tanks, thus forming a high viscosity material called "SLUDGE." Said sludge needs to be removed every operational cycle so that they can be inspected, repaired and re-certified by the classifying unit.

### STATE OF THE ART

The activity of cleaning tanks and containers of tankers is as old as navigation itself. Therefore, many solutions during said period have been developed successfully, each of which exhibiting characteristics related to efficiency, exposure of workers to risks, and generation of environment residues and liabilities. The object of all of them is or has been to differentiate both with regard to ability to either remove oily sludge or the amount of residues generated while the cleaning operation is conducted. The main techniques involve packing and removing said sludge using winches or diluting same by washing the bottom of the tank and then pumping the residues generated to slope (dirty water) tanks.

Despite the evolution and improvement of the vessel tank cleaning performance in recent years, it has become evident that none of the techniques used either in combination or individually could attain a degree of efficiency and safety, in relation to both the workers and environment, since they would not be able to separate the oil from the solids and use the washing water in a cost-effective way by reusing same.

Old techniques still generate or have generated a significantly large amount of residues which needed to be stored in other tanks when the cleaning operation was completed and then sent to the land, thus generating environment liabilities and an even higher waste of carbon footprint at times when the decarbonization is the new global word.

### OBJECT OF THE INVENTION

According to the above, the invention of a process for cleaning oil tanks and vessels by treating the flotation generated residues and reusing the washing water was developed to reduce the exposure of workers in risky areas and mainly reduce environment liabilities and carbon footprint in such activities both offshore and onshore.

The substitution of processes for packing oily sludge on the bottom of tanks with neutral biodegradable chemical thinners and tank bottom washing reduces the amount of workers exposed to inherent risks in confined spaces and the efforts made by those who handle washing nozzles.

Said invention also contributes to the significant reduction in the intervention time while tanks are cleaned offshore, increasing the availability for its aimed activity, that is, storing oil resulting from the activities of exploiting and producing wells offshore.

The technology makes it possible for the oil which was residual and incorporated to the sludge inside the tanks to be separated by flotation and reincorporated as a product into the production process of the unit.

The invention makes it possible to reuse the washing water until the cleaning operation is completed, since the flotation unit removes the oil and prevents same from saturating. Said advantage reduces significantly the amount of oily water generated in the activity.

### SUMMARY OF THE INVENTION

The process for cleaning oil tanks and vessels by treating the flotation generated residues and reusing the washing water is used for the purpose of cleaning oil-containing tanks and containers, by combining the use of water spurts and application of neutral biodegradable chemicals, such as degreasing solvents or descaling detergents, installing a skimer under the submerged hydraulic pump, separating solids using a double vibratory sieve and oily liquids through flotation, recovering and reincorporating the oil into the production process of the unit and reusing the washing water.

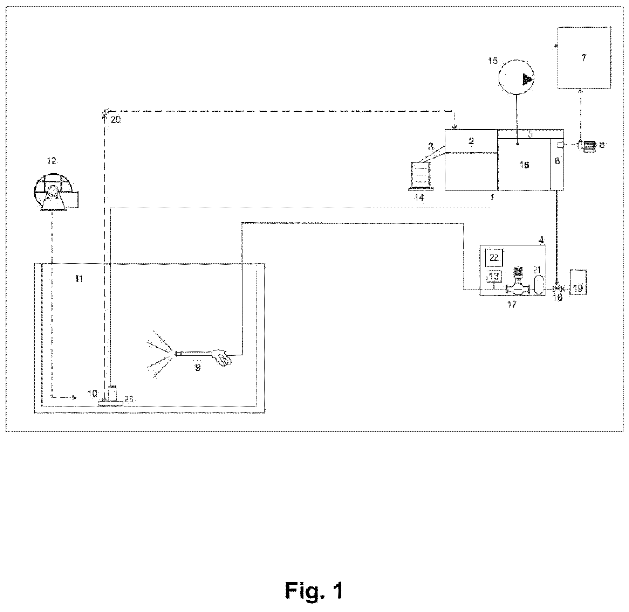

### DESCRIPTION OF THE FIGURE

The process will be better understood as shown in the single figure that represents a block diagram of the process.

### DESCRIPTION OF THE INVENTION

In accordance with said block diagram, the process for cleaning oil tanks and vessels by treating the flotation generated residues and reusing the washing water was developed to clean oil-containing tanks and containers (11), said process comprising the following steps:
**a** - first of all, the high performance Centrifugal Ventilation System is set at a flow rate between 22,000 m³/h and 28,000 m³/h and operated for a time not shorter than 6 hours or until the inner atmosphere of the tank is free from toxic and explosive gases, after having maintained all the ventilations in use while the process is performed, in conformity with NR 33 standards, Working in a Confined Space;
**b** - a submerged centrifugal hydraulic pump (10) assembled on a skimer (23) is installed and driven by a hydraulically propelled unit (22) disposed inside the pressurization unit (4) and connected to a line of 3 or 4-inch hoses in the most rearward portion of the tank floor. Next, the supernatant oil is transferred to the treatment unit (1), thus aligning the valve (20);
**c** - it is applied using the tank containing chemicals (13) - degreasing solvents or descaling detergents - at a concentration not higher than 1 liter of product per 100 liters of washing water on the bottom of the tank to assure the dilution of the sludge and also make it easy to remove same using as little washing water as possible, and consequently attaining the least final generation of residues;
**d** - the subsequent washing of the whole bottom of the tank is carried out using a high flow rate (4 to 6 m³/h) dispensing nozzle (9) at an average pressure (150 to 200 bar) extending from the pressurization unit (4) where the water is captured by the fire-fighting system or the like of the unit (19). In this step, solid sediments, oily water and sludge are conveyed by the water spurt to the most rearward portion of the tank floor, where a submerged centrifugal hydraulic pump whose flow rate ranges between 17 and 23 m³/h is assembled on a skimer (23) that controls the solid sediments that enter into the process. If said solid sediments are not controlled, they can generate delays due to blocked and clogged nets and hoses of the system;
**e** - by handling the valve (20) the fluids generated in the washing process are led to the residue treatment unit (1), where firstly they pass through a solid sediment double separation system (2), comprised of 2 vibratory sieves provided with screens of different pore sizes, one over the other. The fluids leave the tank through the submerged centrifugal hydraulic pump (10) and fall onto a first (upper) sieve provided with a 0.4 to 0.6 mm screen that retains the larger sediments and direct same over a concentrating chute (3) to 200 liter drums (14). Next, the fluids fall by gravity onto a second (lower) sieve provided with a 0.1 to 0.3 mm screen that retains the finer sediments and direct same over a concentrating chute (3) to 200 liter drums (14). The installation of a second (inferior) sieve with smaller pore screens makes it possible to remove the finer sediments which, in other state of the art technologies, are directed to the washing water and then back to the tank;
**f** - still in the residue treatment unit (1), the oily water generated in the washing process, now containing no sediments, is directed to a flotation tank (16) where it is contacted with microbubbles generated by a pneumatic diffuser installed on the bottom of the tank and fed by an air compressor (15). Said tiny bubbles stick to oil particles (petrol), thus forcing them to move up to the free surface in a fraction of second. On the surface, the oil (petrol) is mechanically removed by means of scraping plates (5). Said scrapers are 5-inch high plastic plates vertically disposed on the surface of the flotation tank (16), which move forward at a 1 to 3 meter/minute rate, directing the supernatant oil to a chute connected to a centrifugal pump (8), and the latter redirects the oil to a loading tank (7) indicated by the unit. Therefore, the oil recovered in the washing process that would be discarded as residue on the shore is reincorporated into the process as a product, thus making same cost-effective, mainly reducing the impact on the environment due to the lower generation of residues;
**g** - the water containing no oil that passes through the floater is transferred by communicating vessels to the reuse water tank (6) which is connected by a 3-inch hose to basket filters (21) of the washing and pressurization unit (4). After the reuse water is filtered, it is pressurized by at least 2 vertical multistage EX pumps (17) set at a flow rate between 4 and 6 m³/h and a pressure from 150 to 200 bar and conveyed through 2-inch hoses to the dispensing nozzles (9) of the tank, thus closing the circuit;
**h** - the process is repeated until the tank cleaning operation is completed, where the reuse water is transferred by the electric centrifugal pump (8) to the slope tank of the vessel or truck in the case a tank is located onshore.

### EXAMPLE

As an example of the process for cleaning oil tanks and vessels by treating the flotation generated residues and reusing the washing water, the following steps were carried out:
**a** - the high performance Centrifugal Ventilation System was set at a flow rate of 25,000 m³/h and operated for an 8-hour time until the inner atmosphere of the tank was free from toxic and explosive gases, and then the ventilation scheme of the unit was implemented;
**b** - a submerged centrifugal hydraulic pump (10) assembled on a skimer (23) was installed and driven by a hydraulically propelled unit (22) disposed inside the pressurization unit (4) and connected to a line of 3 or 4-inch hoses in the most rearward portion of the tank floor. Next, the supernatant oil was transferred to the treatment unit (1), thus aligning the valve (20);
**c** - it was applied using the tank containing chemicals (13) - degreasing solvents or descaling detergents - at a concentration of 0.8 liter of product per 100 liters of washing water on the bottom of the tank;
**d** - the subsequent washing of the whole bottom of the tank was carried out using a high flow rate (5 m³/h) dispensing nozzle (9) at an average pressure of 200 bar extending from the pressurization unit (4). The washing water was captured by the fire-fighting system of the unit (19). Solid sediments, oily water and sludge were conveyed by the water spurt to the most rearward portion of the tank floor, where a submerged centrifugal hydraulic pump having a flow rate of about 20 m³/h was assembled on the skimer (23);
**e** - by handling the valve (20) the fluids generated in the washing process were led to the residue treatment unit (1), where firstly they passed through a solid sediment double separation system (2), comprised of 2 vibratory sieves provided with screens of different pore sizes, one over the other, where the fluids left the tank and fell onto a first (upper) sieve provided with a 0.5 mm screen that retained the large sediments and directed same over a concentrating chute (3) to 200 liter drums (14). Next, the fluids fell by gravity onto a second (lower) sieve provided with a 0.2 mm screen that retained the fine sediments and directed same over a concentrating chute (3) to 200 liter drums (14);
**f** - still in the residue treatment unit (1), the oily water generated in the washing process, now containing no sediments, was directed to a flotation tank (16) where it was contacted with microbubbles generated by a pneumatic diffuser installed on the bottom of the tank and fed by an air compressor (15). Said tiny bubbles stack to oil particles (petrol), thus forcing them to move up to the free surface in a fraction of second. On the surface, the oil (petrol) was mechanically removed by means of scraping plates which moved forward at a 2 meter/minute rate, and directed to an electric centrifugal pump (8), and finally directed to the side loading tank (7) indicated by the unit.
**g** - the water containing no oil that passed through the floater was transferred by communicating vessels to the reuse water tank (6) which was connected by a 3-inch hose to basket filters of the washing and pressurization unit (4). After the reuse water was filtered, it was pressurized by at least 2 vertical multistage EX pumps (17) set at a flow rate of 5 m³/h and a pressure of 150 bar, and conveyed through 2-inch hoses to the dispensing nozzles (9) of the tank, thus closing the circuit;
**h** - when the tank was finally cleaned, the washing water was transferred by the centrifugal pump (8) to the slope tank of the tanker.

In the end, the process showed a reduction of about 90% of the generated residues, 66% of the consumed water, 50% of the intervention time, and 35% of the number of workers inside confined spaces engaged in the activities of cleaning oil tanks and containers in the Floating Production Storage and Offloading (FPSO) and onshore units.

### ADVANTAGES OF THE INVENTION

The advantages of the invention are not limited to the operation, but they are extended to the environment, since it reduces about 90% the amount of residues generated in the cleaning operation of tanks and containers, in view of the fact that the process is provided with a residue treatment unit which operates by double mechanical separation and flotation, removing the solids which are placed inside 200 liter drums, and the washing water which will be reused in new washing cycles, and the oil which was previously considered as a residue is recovered and reincorporated as a product into the unit production, instead of being transferred to onshore facilities.

The invention has attained the strategical objects of large oil companies which have been ambitiously committed to decarbonize the operations while COP28 was being held in October 2023. Such decarbonilation may be possible only by implementing cleaner processes which generate less greenhouse gases (GEE). This invention is fully compliant, since we have reduced the volume of generated residues significantly, which residues would then be sent to land and dumped into landfills or other suitable sites onshore, besides consuming 1/3 of washing water compared to other existing processes.

The washing water is generated by an explosion proof (EX) pressurization unit with a redundancy that assures a continuous flow rate of 5 m³/h and a pressure of 150 to 200 bar.

The efficiency (quality and time) of the washing process is assured by the addition of neutral biodegradable chemical thinners before the process is started, thus facilitating the removal of sludge and contributing to the reduction of the water consumed in the cleaning process.

The free entrance of operators into confined spaces is assured by the implementation of a ventilation scheme. Said ventilation assures the dilution of gases, the quality of the air and a comfortable temperature during the whole washing process.

Solid residues are separated by vibratory sieves in the treatment unit, thus preventing ultrafine particles from turning back to the tank which is being washed.

The scope of the present patent, therefore, should not be limited to the example of providing conditioner with collagen, but only to the terms defined in the claims and equivalents thereof.

## Claims

1. - **A PROCESS FOR CLEANING OIL TANKS AND VESSELS BY TREATING THE FLOTATION GENERATED RESIDUES AND REUSING THE WASHING WATER**, carried out in oil containing tanks and containers (11), **characterized by** comprising the following steps:
**a** - the Centrifugal Ventilation System is set at a flow rate between 22,000 m³/h and 28,000 m³/h and operated for a time not shorter than 6 hours or until the inner atmosphere of the tank is free from toxic and explosive gases;
**b** - a submerged centrifugal hydraulic pump (10) assembled on a skimer (23) is installed and driven by a hydraulically propelled unit (22) disposed inside the pressurization unit (4) and connected to a line of 3 or 4-inch hoses in the most rearward portion of the tank floor; next, the supernatant oil is transferred to the treatment unit (1), thus aligning the valve (20);
**c** - it is applied using the tank containing chemicals (13) - degreasing solvents or descaling detergents - at a concentration not higher than 1 liter of product per 100 liters of washing water on the bottom of the tank;
**d** - the subsequent washing of the whole bottom of the tank is carried out using a high flow rate (4 to 6 m³/h) dispensing nozzle (9) at an average pressure (150 to 200 bar) extending from the pressurization unit (4) where clean water is captured by the fire-fighting system of the unit (19); in this step, solid sediments, oily water and sludge are conveyed by the water spurt to the most rearward portion of the tank floor, where a submerged centrifugal hydraulic pump whose flow rate ranges between 17 and 23 m³/h is assembled on a skimer (23) that controls the solid sediments that enter into the process;
**e** - by handling the valve (20) the fluids generated in the washing process are led to the residue treatment unit (1), where firstly they pass through a solid sediment double separation system (2) comprised of 2 vibratory sieves provided with screens of different pore sizes, one over the other, wherein the fluids leave the tank through the submerged centrifugal hydraulic pump (10) and fall onto a first (upper) sieve provided with a 0.4 to 0.6 mm screen that retains the larger sediments and direct same over a concentrating chute (3) to 200 liter drums (14); next, the fluids fall by gravity onto a second (lower) sieve provided with a 0.1 to 0.3 mm screen that retains the finer sediments and direct same over a concentrating chute (3) to 200 liter drums (14);
**f** - still in the residue treatment unit (1), the oily water generated in the washing process, now containing no sediments, is directed to a flotation tank (16) where it is contacted with microbubbles generated by a pneumatic diffuser installed on the bottom of the tank and fed by an air compressor (15), making said tiny bubbles stick to oil particles (petrol) and forcing them to move up to the free surface in a fraction of second; on the surface, the oil (petrol) is mechanically removed by means of scraping plates (5), which move the supernatant oil to a chute connected to a centrifugal pump (8), and the latter reincorporates the recovered oil into a loading tank (7);
**g** - the water containing no oil that passes through the floater is transferred by communicating vessels to the reuse water tank (6) which is connected by a 3-inch hose to basket filters (21) of the washing and pressurization unit (4); after the reuse water is filtered, it is pressurized by at least 2 vertical multistage EX pumps (17) set at a flow rate between 4 and 6 m³/h and a pressure from 150 to 200 bar and conveyed through 2-inch hoses to the dispensing nozzles (9) of the tank, thus closing the circuit;
**h** - the process is repeated until the tank cleaning operation is completed, where the reuse water is transferred by the electric centrifugal pump (8) to the slope tank of the vessel or truck in the case a tank is located onshore.

2. - **A PROCESS FOR CLEANING OIL TANKS AND VESSELS BY TREATING THE FLOTATION GENERATED RESIDUES AND REUSING THE WASHING WATER**, according to claim 1, **characterized in that** the scrapers are 5 cm high plastic plates vertically disposed on the surface of the flotation tank (16) that move forward at a 1 to 3 meter/minute rate.

3. - **A PROCESS FOR CLEANING OIL TANKS AND VESSELS BY TREATING THE FLOTATION GENERATED RESIDUES AND REUSING THE WASHING WATER**, according to claim 1, **characterized in that** vertical pumps (17) are multistage EX pumps.
